# EUROPEAN PATENT APPLICATION

(11) **EP 4 756 692 A1**
(43) Date of publication of application: **10.06.2026**
(21) Application number: 24894075.1
(22) Date of filing: 14.11.2024
(51) Int. Cl.: G06Q 10/20

(54) **INSPECTION WORKFLOW MANAGEMENT SYSTEM**

(30) Priority: 21.11.2023 JP 2023197083
(71) Applicant: Hitachi Construction Machinery Co., Ltd., Tokyo 110-0015 (JP)
(72) Inventor: MATSUSHITA Shinya, Tokyo 110-0015 (JP); SATO Jumpei, Tokyo 110-0015 (JP)
(74) Representative: Manitz Finsterwald Patent- und Rechtsanwaltspartnerschaft mbB
(86) International application number: PCT/JP2024/040483
(87) International publication number: WO 2025/110084

(57) **Abstract**

An inspection workflow management system includes: a server that manages an inspection workflow for an instruction of an inspection procedure of a work machine; and a terminal connected to the server via a network, in which the terminal includes a communication section that is connected to the work machine as an inspection target and acquires identification information of the work machine, a display section that displays the inspection workflow including an instruction to acquire moving image data of an inspection target part of the work machine, an operation section that inputs inspection-related information corresponding to the inspection workflow, and an image capturing section that acquires the moving image data of the inspection target part, the server includes a storage section that stores machine attribute information of the work machine, which has been associated with the identification information, and stores the moving image data of the inspection target part, which has been acquired by the terminal, the terminal associates the identification information and the inspection-related information with the moving image data of the inspection target part, which has been acquired by the image capturing section, the server stores the machine attribute information in further association with the associated moving image data of the inspection target part, to the storage section, and the terminal or the server further includes a retrieval section that extracts the moving image data of the inspection target part associated with at least one of the identification information input to the terminal, the inspection-related information, and the machine attribute information.

## Description

### Technical Field

The present invention relates to a system for managing an inspection workflow of a work machine.

### Background Art

Since a work machine such as an excavator is used differently for each operation site, an inspection portion differs for each work machine also in maintenance work. Therefore, it is required to perform quick and reliable inspection on many constituent parts regardless of whether or not a maintenance staff is an experienced person, and it is a problem to perform efficient inspection. Therefore, in Patent Literature 1, a technique for outputting a maintenance and inspection flow in order to efficiently perform maintenance and inspection of a machine has been known.

### Citation List

### Patent Literature

Patent Literature 1: JP 2003-178148 A

### Summary of Invention

### Technical Problem

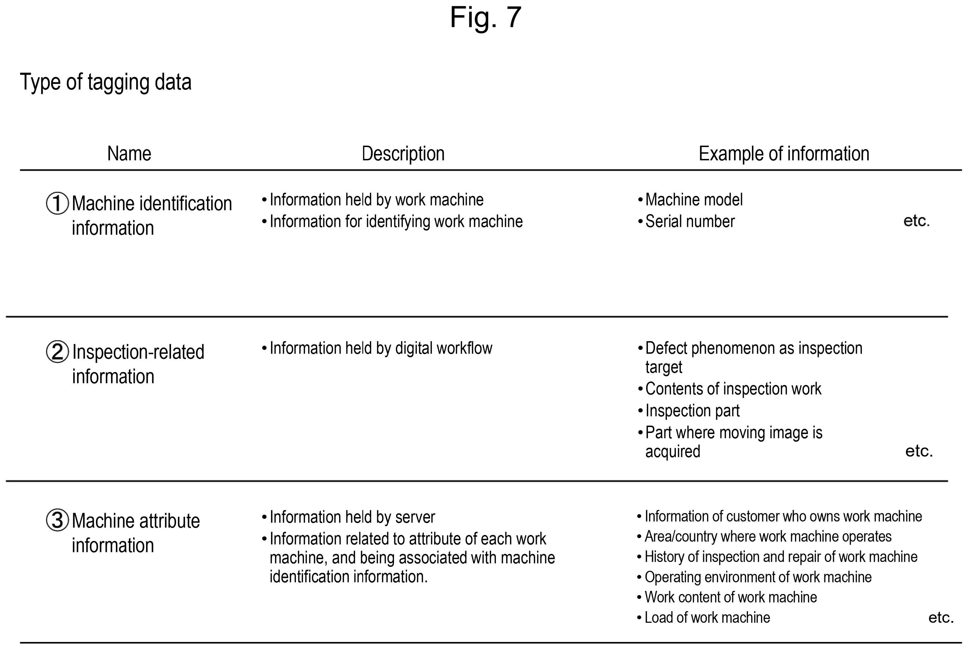

Patent Literature 1 above describes that, in a case where a defect is identified in a part included in a maintenance and inspection flow of a machine, a treatment procedure for coping with the defect is output (paragraphs 0052 and 0068 to 0070, Fig. 7, and the like). However, the treatment procedure is merely a simple response of inputting the state of the part as an inspection target. Therefore, in a case where the cause of the defect cannot be identified and the fundamental solution cannot be achieved, a specialized treatment institution is requested to take a response, so that there still remains a problem that it takes time to complete the repair.

The present invention has been made in view of the above problems, and an object of the present invention is to be able to shorten a time required to identify a cause of a defect in maintenance and inspection of a work machine, and to perform quick and reliable maintenance and inspection.

### Solution to Problem

To solve the above problems, an inspection workflow management system according to the present invention includes: a server that manages an inspection workflow for an instruction of an inspection procedure of a work machine; and a terminal connected to the server via a network, in which the terminal includes a communication section that is connected to the work machine as an inspection target and acquires identification information of the work machine, a display section that displays the inspection workflow including an instruction to acquire moving image data of an inspection target part of the work machine, an operation section that inputs inspection-related information corresponding to the inspection workflow, and an image capturing section that acquires the moving image data of the inspection target part, the server includes a storage section that stores machine attribute information of the work machine, which has been associated with the identification information, and stores the moving image data of the inspection target part, which has been acquired by the terminal, the terminal associates the identification information and the inspection-related information with the moving image data of the inspection target part, which has been acquired by the image capturing section, the server stores the machine attribute information in further association with the associated moving image data of the inspection target part, to the storage section, and the terminal or the server further includes a retrieval section that extracts the moving image data of the inspection target part associated with at least one of the identification information input to the terminal, the inspection-related information, and the machine attribute information.

### Advantageous Effects of Invention

According to the present invention, by associating an image, a moving image, and a sound (moving image data) related to a past defect case with an inspection result or information regarding a work machine, and enabling extraction of related moving image data using these pieces of information as keywords, it is easy to determine whether or not a defect found in inspection is the same as a past defect case by using moving image data, and it is possible to lead shortening of a time required to identify a cause of the defect.

Further features related to the present invention will become apparent from the description of the present specification and the accompanying drawings. Problems, configurations, and effects other than those described above will be clarified by the following description of embodiments.

### Brief Description of Drawings

Fig. 1 is a conceptual diagram illustrating an overall configuration of the present invention.
Fig. 2 is a block diagram illustrating a hardware configuration of an entire system according to Embodiment 1 of the present invention.
Fig. 3 is a flowchart illustrating a processing flow executed by the present invention.
Fig. 4 is a block diagram illustrating a hardware configuration of an entire system according to Embodiment 2 of the present invention.
Fig. 5 is a flowchart illustrating a processing flow executed in Embodiment 2.
Fig. 6 is a diagram for describing tagging performed in the present invention.
Fig. 7 is a diagram illustrating types of tagging data.
Fig. 8 is a block diagram illustrating a hardware configuration of an entire system according to a modification example.

### Description of Embodiments

### [Embodiment 1]

Hereinafter, embodiments will be described with reference to the drawings. Note that, in the present embodiment, an example of an excavator will be described as a work machine, but the work machine is not limited to the excavator, and may be a crane vehicle, a wheel loader, a forklift, a bulldozer, or the like, or a combination thereof.

At an operation site of a work machine, a maintenance inspector (referred to as a service engineer below) inspects the work machine by using a portable terminal. Since the inspection portion varies depending on the operating status of a target work machine, the inspection portion is output/displayed on a display screen of a terminal depending on an inspection target. The service engineer performs inspection in accordance with a (digital) workflow. Here, the workflow indicates an inspection procedure involving screen transition, and, in a case where a defect is found in a processing process of the procedure, moving image data is acquired and stored in association with information regarding the defect. With such a configuration, when a defect case has occurred, it is easy to determine whether or not the found defect case is the same as a past defect case by using moving image data.

### Management System

A management system according to the present embodiment manages operation information transmitted from a work machine as a management target and moving image data of an inspection result transmitted from a mobile terminal in association with a certain inspection procedure in a workflow including a plurality of inspection procedures, thereby providing a service engineer with the moving image data of the inspection result when a similar event has occurred.

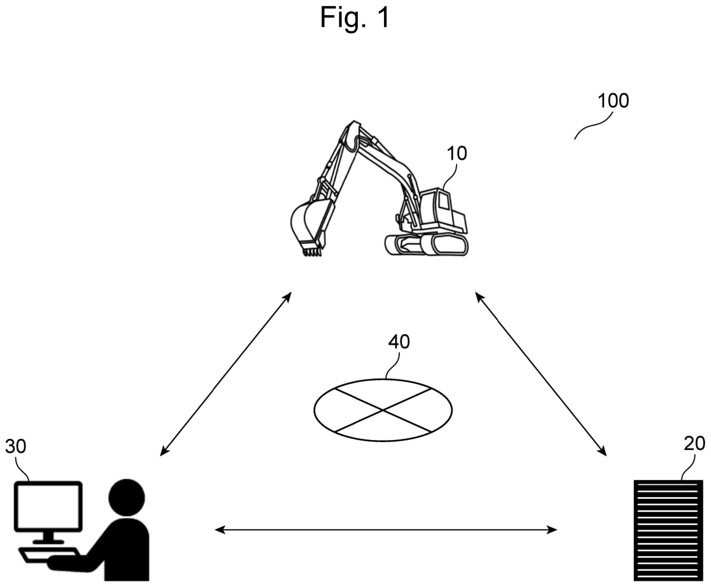

Fig. 1 is a conceptual diagram for describing an outline of an inspection workflow management system according to an embodiment of the present invention.

A management system 100 in the present embodiment includes a plurality of work machines 10, a maintenance management server 20 configured to be able to communicate with the work machines 10 via a network 40, and terminals 30 capable of communicating with the server 20 and the work machines 10 via the network 40.

The work machine 10 includes an operation sensor and wireless communication means in a vehicle body, and can communicate with the maintenance management server 20 and the terminal 30 via the network 40. The maintenance management server 20 is provided for performing maintenance management of the work machine 10 such as an excavator. The work machine 10 that is a target of maintenance management by the maintenance management server 20 is not limited to an excavator, and may be, for example, a wheel loader, a road machine, a dump truck, or the like.

In response to a request from an inspector of the work machine 10, the maintenance management system 100 transmits a program related to failure prediction and maintenance information of the work machine to the terminal 30.

The terminal 30 is a portable notebook PC or a stationary PC installed in an office, and may be, for example, a smartphone, a tablet terminal, a mobile phone, or a PDA (Personal Data Assistant) carried by a maintenance staff or a user of the excavator 10. By selecting the identification number of a specific excavator 10 via the terminal 30, the maintenance staff or the user can request the server 20 for inspection information regarding the specific excavator 10.

A sensor that detects an operating state is attached to each main part of the work machine 10, and a controller that converts the operating state detected by the sensor into data and transmits the data to the server 20 via, for example, the network 40 is provided.

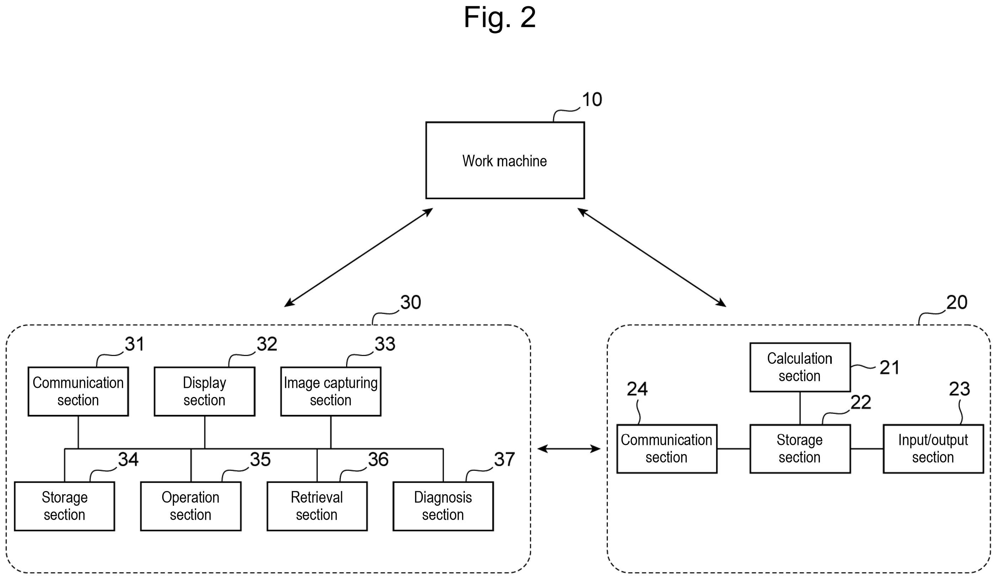

Fig. 2 is a block diagram illustrating a hardware configuration of the entire system according to the present embodiment.

### Terminal

The terminal 30 includes a communication section 31, a display section 32, an image capturing section 33, a storage section 34, an operation section 35, a retrieval section 36, and a diagnosis section 37.

The communication section 31 has, for example, a wireless communication function in order to perform connection to the network 40. The display section 32 includes, for example, a display, and has a function of displaying a guidance screen related to inspection work and each piece of information for an inspector.

The image capturing section 33 has an image capturing function capable of capturing a moving image. Furthermore, for example, the terminal may be connected to a terminal (for example, a smartphone) having an image capturing function in a wireless/wired manner. The storage section 34 has a memory function and stores a workflow indicating an inspection procedure of the work machine. The operation section 35 includes a touch panel provided on a display surface of the display section 32, and performs an input process related to the operation. In addition, the operation section 35 also has a function of receiving an input of an inspection result, an input of a retrieval condition, and the like. For example, the inspector can input an inspection result or the like by pressing and selecting an icon or a button displayed on the display section 32 or perform an input through a keyboard displayed on the display section 32.

The retrieval section 36 can access various functions stored in a storage section 22 (described later) of the maintenance management server 20 to execute retrieval and extraction of information. The diagnosis section 37 identifies the cause of a defect based on data of the sensor acquired from the work machine 10, and displays the identification result on the display section 32 or transmits the identification result to the server 20.

### Maintenance Management Server

The maintenance management server 20 in the present embodiment provides the terminal with information for supporting maintenance work, such as a recommended time for replacement of components and a degree of progress of deterioration, based on operation information and an inspection result, which have been transmitted from the work machine 10 or the terminal 30 of the service engineer. The maintenance management server 20 includes a calculation section 21, a storage section 22, an input/output section 23, and a communication section 24.

The calculation section 21 includes a CPU (Central Processing Unit) and executes various programs. The storage section 22 has a memory function similarly to the storage section 34, and stores the operation information of the work machine 10 transmitted from the work machine 10 and the maintenance information transmitted from the terminal 30 in association with individual identification information of the work machine 10. In addition, data generated during processing by the calculation section 21 is stored in the storage section 22. In addition, the storage section 22 stores programs for exerting various functions executed by the calculation section 21. The input/output section 23 includes, for example, a touch panel and the like, and receives various inputs. The communication section 24 receives an operation instruction from the terminal 30, and transmits and receives an operation instruction to and from the outside of the server, such as the work machine 10 and the terminal 30.

### Functions of Server and Terminal

An application (inspection application) for executing inspection of the work machine 10 is installed in advance on the terminal 30, and identification information (for example, model and serial number) of the work machine 10 is acquired by connection to any work machine 10.

The inspection application includes a plurality of programs corresponding to the workflow for each machine. When connected to the target work machine 10, the inspection application of the terminal is activated, and machine identification information is automatically input to the terminal 30. Then, when an instruction to execute inspection is issued via the terminal 30, a workflow corresponding to the identification information acquired from the connected work machine 10 is displayed on the display section of the terminal 30.

Here, the workflow indicates an inspection procedure for each defect in the work machine. The workflow includes a plurality of inspection procedures, and a detail screen including specific inspection contents in each inspection procedure is displayed. Therefore, when a certain inspection procedure is confirmed, the display transitions to a screen showing the next inspection procedure. In addition, when the workflow is being executed, it is indicated which inspection procedure is currently executed in the whole.

The service engineer inspects the work machine 10 in accordance with the workflow. When a defect is identified in the middle of the inspection procedure, a message for an instruction to acquire data (a picture, a moving image, and a sound) of a defect portion is displayed on the terminal 30 as related information. The service engineer operates the terminal 30 in accordance with the instruction of the message to acquire the data of the defect portion. The terminal 30 associates the acquired data with the identification information of the target work machine and the workflow.

The terminal 30 uploads the data associated with the workflow to the maintenance management server 20 via the communication section 31. The maintenance management server 20 stores the data in the storage section 22, and thereafter, in a case where there is a request from any terminal 30 that desires to refer to a moving image similar to a defect event, moving image data corresponding to a condition designated by the attribute of the work machine is output and displayed on this terminal 30.

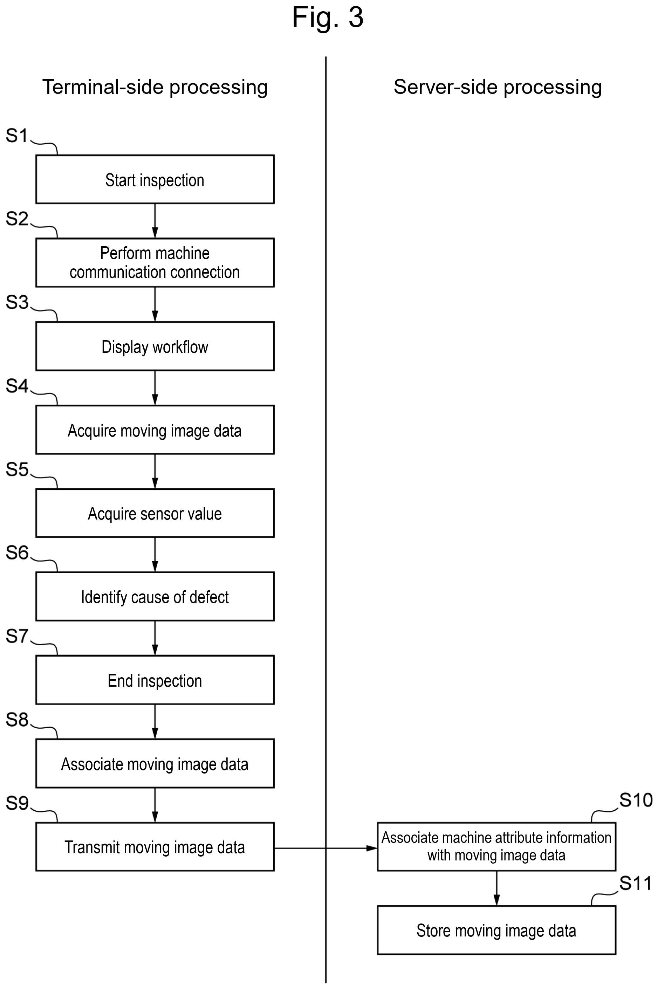

Fig. 3 is a flowchart illustrating processing executed by the system in the present embodiment.

First, in S1, the service engineer connects the terminal 30 to the work machine 10, selects information for identifying the machine as an inspection target, and then the inspection is started. Then, in S2, the communication section 31 of the terminal 30 is activated to establish a communication state with the work machine 10. In S3, a workflow (inspection procedure) is displayed on the display screen of the terminal 30. The workflow is stored in the terminal 30, and may be stored in the server 20, and in this case, the terminal 30 obtains information of the workflow from the server 20.

In S4, in the workflow, the inspection proceeds as the screen displaying the inspection procedure transitions, and in a case where the terminal 30 confirms that a defect portion has occurred in the process, an instruction to acquire data (for example, a moving image or a voice) of the target portion is displayed, and necessary data is acquired via the image capturing section 33. In S5, an instruction to acquire the sensor value representing the operating state of a portion where a defect has occurred is displayed in the workflow, and the sensor value is acquired from the work machine 10 via the communication section 31. In S6, the terminal 30 identifies the cause of the defect based on the acquired sensor value. At this time, a defect identification result may be displayed on the display section 32.

In S7, the terminal 30 that has identified the cause of the defect ends the inspection. In S8, the terminal 30 transmits data (including a moving image and a sound) in which the work machine 10 as an inspection target is associated with the inspection result to the server 20 via the communication section 31. In S8, the terminal 30 associates various types of information of the work machine 10 as the inspection target and an inspection result with the acquired moving image data. Here, in the present embodiment, this association is performed by "tagging", and details of this tagging will be described later. In S9, the terminal 30 transmits the associated moving image data (including a moving image and a sound) to the server 20 via the communication section 31. In S10, the server 20 associates the received moving image data with attribute information of the machine present on the server. In S11, the server 20 stores the moving image data associated with the attribute information of the machine in the storage section 22. Then, the processing is ended.

As described above, by associating (tagging) the information of the work machine and the inspection result with the acquired moving image data and storing the association result in the server/terminal as in the present embodiment, the service engineer who performs the inspection later retrieves the information by using the keyword or the like, and refers to the moving image data or the like similar to the extracted defect event, so that it is possible to quickly identify the defect cause.

The features of the workflow described above are listed below.
1) In the workflow, first, an alarm for identifying where and what kind of defect has occurred in the work machine based on the data of the operating state detected by the sensor of the work machine is displayed.
2) Next, a detail screen showing confirmation items (check points) of a portion related to the defect is displayed.
3) In many cases, defects are associated with a plurality of portions in a complex manner. Since there is a necessary check item for each candidate considered to be related to the defect, the workflow is configured by a plurality of detail screens for each inspection point. Although the detail screen is sequentially displayed, the detail screen may include reference moving image data, and in this case, a display indicating "there is associated moving image" is made at an associated portion. Then, in the terminal, the moving image data stored in the server is displayed by selecting and designating the display. The display may be performed each time the screen transitions to the corresponding screen, or may be the beginning or the end of the workflow, or a combination thereof, and a display timing is not limited.

As described above, it is an object to identify a portion that is a candidate for the cause of the defect through the confirmation items on each detail screen and to acquire related moving image data. Because of the workflow, when necessary check items on the detail screen are completed, the screen transitions to the next detail screen, and when a candidate of the cause of the defect is identified as a result of the check items on any of the detail screens, detailed inspection such as confirming a sensor value is performed to further identify the root cause. The detail screen of the workflow includes a text message related to the confirmation matter, a circuit diagram of the inspection portion, and the like.

4) The acquisition of the moving image data is freely determined by an executor of the workflow.

### Method for Managing Moving Image Data

In the above description, the terminal 30 acquires the moving image data, and performs so-called "tagging" in which the detail screen is associated with the identification information of the work machine as the inspection target. The result of tagging is displayed on the display section 32 of the terminal 30, but a message indicating "acquired" may be displayed on the detail screen each time the moving image data is acquired, or a list of correspondence relationships between the moving image data and the detail screen may be collectively displayed at the end of the workflow. Note that the display format is an example, and the display format is not limited thereto.

### Tagging

The terminal 30 and the server 20 perform tagging to associate the moving image data acquired in the process of the workflow with the inspection result and the information regarding the work machine. Hereinafter, the former is referred to as "primary tagging", and the latter is referred to as "secondary tagging".

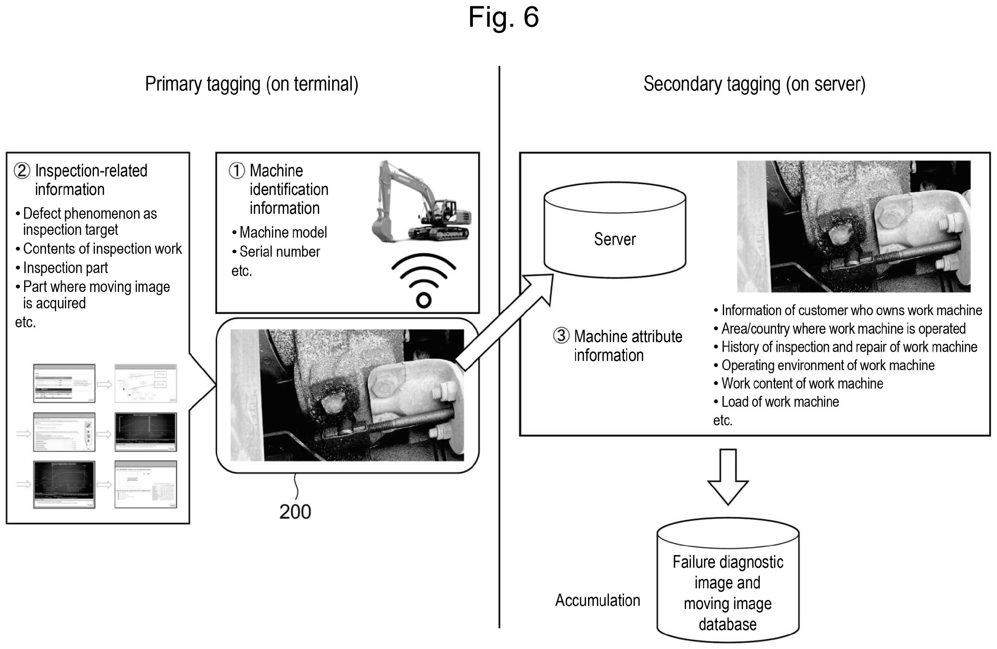

Fig. 6 is a conceptual diagram illustrating tagging.

The primary tagging is performed by the terminal 30 when an inspection of any work machine 10 is performed along the workflow. Specifically, the information regarding the work machine (machine identification information), the information regarding the inspection (inspection-related information), and moving image data 200 acquired in the process of the workflow are associated with each other. The machine identification information and the inspection-related information will be described later.

In the secondary tagging, the information primarily tagged by the terminal 30 is further classified and associated by the server 20 based on an attribute (machine attribute information) common to a plurality of work machines 10. That is, the information of the individual work machines 10 on which the primary tagging has been performed is secondarily tagged by the server 20, whereby the information is aggregated. As described above, the workflow for each work machine 10 and the information of the work machine 10 that has been primarily tagged by the terminal 30 are secondarily tagged and stored in the server 20.

Fig. 7 is a diagram illustrating types of tagging data.

"Machine identification information" is information for identifying each work machine 10, such as "machine model" and "serial number", and is stored in the controller of the work machine 10. "Inspection-related information" is, for example, information held for each workflow, such as "defect phenomenon as an inspection target", "content of inspection work", "inspection part", and "part where moving image has been acquired". "Machine attribute information" is information regarding an attribute common to work machines regardless of a machine model or a serial number, such as "information regarding a customer who own the work machine (customer name, industry type, and the like)", "area/country where the work machine operates", "history of inspection and repair of the work machine (time, contents, and the like)", "operating environment of the work machine (tropical, cold, highland, flat, and the like)", "work content of the work machine (civil engineering, dismantling, crushing, and the like)", and "work load (engine output or the like) of the work machine", and is stored in the server 20 in association with the machine identification information.

Among the above types of information, the information associated by the primary tagging executed by the terminal 30 is the machine identification information that is information of each work machine 10 and inspection-related information which is information acquired as a result of inspection, and the information associated by the secondary tagging executed by the server 20 is the machine attribute information that is information stored in common for a plurality of work machines.

As described above, since the inspection result in the workflow for each work machine is associated with the moving image data (primary tagging) and is further classified and associated for each attribute of the work machine (secondary tagging), in a case where a defect has occurred in a certain work machine and inspection is performed, moving image data acquired in the past inspection of another work machine having an attribute common to the work machine as the inspection target, such as another work machine of the same machine model, another work machine in which the same defect phenomenon has occurred, or another work machine operating in the same area/country, can be easily retrieved as related data, and the extracted moving image data can be referred to. As a result, it is possible to realize efficient inspection.

The tagged moving image data is stored in the server 20, and can be retrieved and extracted by the terminal 30. Specifically, when tagging information is input as the retrieval condition in the terminal 30 during the progress of the workflow or before the start of the workflow, the moving image data corresponding to the retrieval condition is extracted from the moving image data stored in the server 20, and the extraction result is displayed on the display section 32 of the terminal. The retrieval condition may be any one of "machine identification information" and "inspection-related information" set in the primary tagging and "machine attribute information" set in the secondary tagging, or may be freely designated such as a combination thereof.

By tagging the moving image data, it is possible to perform reverse lookup when retrieving and extracting similar cases thereafter. Note that the order of display may vary depending on the number of extraction results. For example, it is assumed that a mark (for example, "☆") indicating that it is useful is displayed on the display section 32 of the terminal 30 to be selectable, and in a case where the extracted moving image data is useful as a reference for identifying the cause of the defect, and an operator of the terminal 30 performs an operation of selecting the mark, selection of the mark is stored in the storage section 22 of the server in association with the moving image data. When retrieving and extracting the moving image data, the terminal 30 determines whether or not there is the moving image data associated with the mark, and in a case where there is data, the extraction result is displayed on the display section 32 in order of the moving image data having the largest number of times of mark selection. The number of displays can be freely set.

In the above flowchart, the sensor value is acquired in S5, but a defect portion may be identified in the middle of the workflow. In that case, all of the detail screens included in the workflow may be interrupted without transitioning, and may be resumed after handling the defect portion.

### [Embodiment 2]

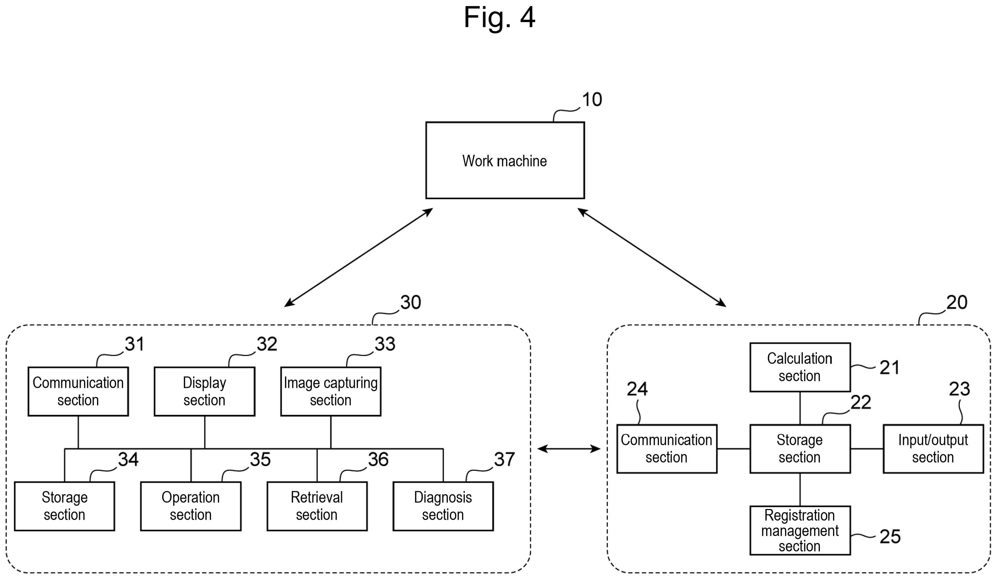

Fig. 4 is a block diagram illustrating a hardware configuration of an inspection workflow management system according to Embodiment 2 of the present invention.

The system according to Embodiment 2 is different from that in Embodiment 1 in that the maintenance management server 20 is provided with a registration management section 25 that manages "acquisition history of moving image data".

In Embodiment 1, the moving image data is acquired only for a portion determined to be necessary by the executor of the workflow. However, even a moving image of a portion that is not necessary at the time of inspection of the work machine as an inspection target may be used as a reference at the time of inspection of another work machine. Therefore, the acquisition of the moving image data may be performed not only by the determination of the executor of the workflow but also according to the display on the detail screen.

Therefore, the registration management section 25 manages an acquisition history (date and time) of the moving image data for each detail screen. In a period set freely, with reference to the number of times of acquisition of the moving image data for each detail screen, which has been stored in the registration management section 25, a detail screen having a larger number of times of acquisition may be regarded as having a higher necessity of the moving image data, and the acquisition of the moving image data may be prompted.

It is helpful to smoothly understand the inspection procedure if there is a moving image in the detail screen in addition to the explanation sentence in a text message. Therefore, there are portions where it is necessary to acquire moving image data particularly intensively for reference of defect cases. Therefore, in the present embodiment, it is assumed that the input/output section 23 of the server 20 designates a moving image necessary for each detail screen of the workflow in advance. For example, a message indicating that "moving image data is necessary" may be displayed as a text message or an icon in a pop-up format at a specific portion while the detail screen is displayed.

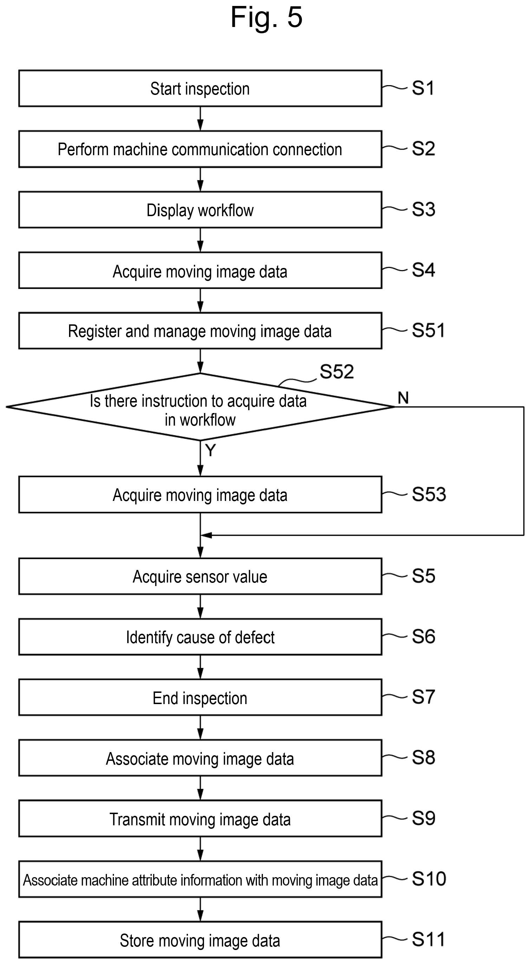

Fig. 5 is a flowchart illustrating processing executed by the inspection workflow management system according to Embodiment 2.

The present embodiment relates to registration and management of moving image data. The present embodiment is different from the processing in Embodiment 1 in Fig. 3, in S51, S52, and S53. Therefore, descriptions of other steps will be omitted.

In S51, the registration management section 25 performs registration and management. Specifically, the registration management section 25 temporarily stores the acquired moving image data, displays the acquired moving image data on the terminal 30, and stores the acquired moving image data in response to an instruction to finally store the acquired moving image data on the terminal 30 after the end of the workflow.

In S52, the calculation section 21 of the server issues an instruction to acquire data. In a case where there is a data acquisition instruction in the workflow (Y), the process proceeds to S53 to acquire moving image data. The calculation section 21 has, for example, a moving image presence/absence determination function, determines a detail screen that does not include a moving image in the workflow, and displays a message notifying that the screen has transitioned to a detail screen that does not include a moving image when the screen transitions to this detail screen. For example, a message indicating "no moving image data" is displayed near a part where acquisition of moving image data is designated. In a case where there is no data acquisition instruction in the workflow (N), the process proceeds to S5 to acquire a sensor value of a part as the inspection target or the like. With these processes, it is possible to reliably recognize the acquisition of the moving image data on the detail screen of the workflow.

The machine identification information is directly acquired from the work machine, whereas the inspection-related information includes information input by the service engineer. Therefore, there is a possibility that a human input error occurs. In addition, moving image data acquired by the terminal may be inappropriate. For example, when a moving image is obtained by capturing a part different from an image capturing target of moving image data required for a certain detail screen, or the image capturing target is not accurately captured, there arises a problem that accurate association with the detail screen is not possible. Therefore, at the time of acquiring the moving image data, the moving image data is temporarily stored in the terminal (primary registration), and then the terminal is notified whether the moving image data to be registered and the associated primary tagged information are correct. After confirmation on the terminal, the moving image data is finally registered (secondary registration). As described above, by performing two-stage registration management of confirming whether or not there is an error in the moving image acquired by an acquirer of the moving image and associated information in the terminal, the moving image data is reliably registered in the server.

### [Modification Example]

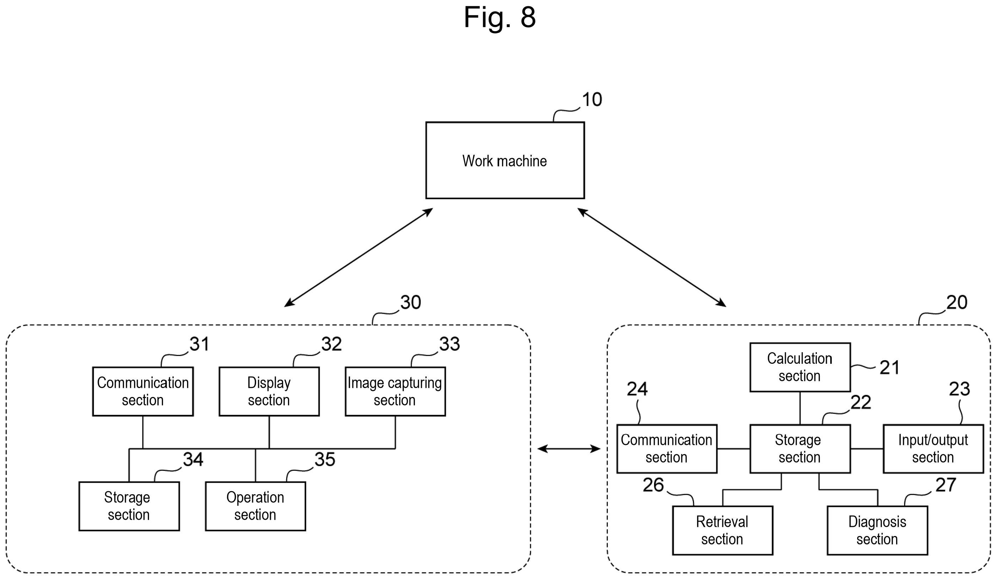

Finally, a modification example will be described with reference to Fig. 8.

Fig. 8 is a block diagram illustrating a hardware configuration of an entire system according to the modification example. As illustrated in Fig. 8, in the modification example, the server 20 includes a retrieval section 26 and a diagnosis section 27. The server 20 according to the modification example exerts functions similar to those of the retrieval section 36 and the diagnosis section 37 of the terminal described above.

Note that, although the terminal 30 does not include the retrieval section and the diagnosis section in the modification example, the terminal 30 may also include these functional units similarly to the above-described embodiment, and retrieval or diagnosis may be executed by either the server 20 or the terminal 30.

The following operational effects can be obtained by the embodiments of the present invention described above.

(1) An inspection workflow management system according to the present invention includes: a server that manages an inspection workflow for an instruction of an inspection procedure of a work machine; and a terminal connected to the server via a network, in which the terminal includes a communication section that is connected to the work machine as an inspection target and acquires identification information of the work machine, a display section that displays the inspection workflow including an instruction to acquire moving image data of an inspection target part of the work machine, an operation section that inputs inspection-related information corresponding to the inspection workflow, and an image capturing section that acquires the moving image data of the inspection target part, the server includes a storage section that stores machine attribute information of the work machine, which has been associated with the identification information, and stores the moving image data of the inspection target part, which has been acquired by the terminal, the terminal associates the identification information with the inspection-related information with respect to the moving image data of the inspection target part, which has been acquired by the image capturing section, the server stores the machine attribute information in further association with the associated moving image data of the inspection target part, in the storage section, and the terminal or the server further includes a retrieval that extracts the moving image data of the inspection target part associated with at least one of the identification information input to the terminal, the inspection-related information, and the machine attribute information.

With the above configuration, by performing tagging of associating an image, a moving image, and a sound (moving image data) related to a past defect case with an inspection result or information regarding a work machine, retrieving related moving image data using these pieces of information as keywords, and enabling extraction, it is easy to determine whether or not a defect found in inspection is the same as a past defect case by using moving image data, and it is possible to lead shortening of a time required to identify a cause of the defect.

(2) At least one of the terminal and the server further includes a diagnosis section that identifies a cause of a defect of an inspection target part of the work machine based on a sensor value representing an operating state of the inspection target part, the terminal displays an instruction to acquire the sensor value on the display section when the moving image data is acquired by the image capturing section, and the diagnosis section identifies the cause of the defect of the inspection target part based on the sensor value acquired by the terminal, and causes the display section to display the identification result. As a result, for example, the identification result of the cause of the defect is displayed on the display section, whereby the user of the system can visually ascertain the cause of the defect of the work machine.
(3) The server further includes a registration management section that stores an acquisition history of moving image data of an inspection target part corresponding to the inspection workflow, and in a case where the acquisition history of the moving image data of the inspection target part corresponding to the inspection workflow displayed on the display section is stored in the registration management section, the terminal displays the moving image data of the inspection target part corresponding to the inspection workflow on a part of a display region of the inspection workflow in the display section. As a result, the user of the system can easily ascertain whether or not there is moving image data of the inspection target part corresponding to the inspection workflow.
(4) The registration management section calculates the number of acquisitions based on the acquisition history of the moving image data of the inspection target part corresponding to the inspection workflow, and the terminal causes the number of acquisitions to be displayed in the display region of the inspection workflow. As a result, moving image data having a large number of times of acquisition can be set in a high priority order as the necessity of acquisition becomes high.
(5) The terminal determines a display order of an extraction result of the moving image data of the inspection target part on the display section based on a reference frequency of the moving image data. As a result, the user of the system can ascertain the importance of the moving image data at a glance, and can use the moving image data for maintenance and inspection.
(6) The machine attribute information includes at least one of information regarding a customer who owns the work machine, information regarding an area where the work machine operates, information regarding a history of inspection and repair of the work machine, information regarding a work content of the work machine, information regarding an operating environment of the work machine, and information regarding a work load of the work machine. As described above, since the machine attribute information includes the information regarding the attribute common to a plurality of work machines, it is easy to retrieve and extract the moving image data of a similar defect.

Note that the present invention is not limited to the above embodiments, and various modifications are possible. For example, the above embodiments have been described in detail to describe the present invention in an easy-to-understand manner, and the present invention is not necessarily limited to an aspect including all the described configurations. Some of the configurations of a certain example can be replaced with configurations of another example. The configurations of another example can be added to the configurations of a certain example. Some of the configurations of each example can be deleted, or other configurations can be added or replaced.

### Reference Signs List

- 10: Work machine
- 20: Maintenance management server
- 24: Communication section
- 25: Registration management section
- 30: Terminal
- 31: Communication section
- 32: Display section
- 33: Image capturing section
- 35: Operation section
- 36: Retrieval section
- 37: Diagnosis section

## Claims

1. An inspection workflow management system comprising:
a server that manages an inspection workflow for an instruction of an inspection procedure of a work machine; and
a terminal connected to the server via a network,
wherein the terminal includes
a communication section that is connected to the work machine as an inspection target and acquires identification information of the work machine,
a display section that displays the inspection workflow including an instruction to acquire moving image data of an inspection target part of the work machine,
an operation section that inputs inspection-related information corresponding to the inspection workflow, and
an image capturing section that acquires the moving image data of the inspection target part,
the server includes a storage section that stores machine attribute information of the work machine, which has been associated with the identification information, and stores the moving image data of the inspection target part, which has been acquired by the terminal,
the terminal associates the identification information and the inspection-related information with the moving image data of the inspection target part, which has been acquired by the image capturing section,
the server stores the machine attribute information in further association with the associated moving image data of the inspection target part, to the storage section, and
the terminal or the server further includes a retrieval section that extracts the moving image data of the inspection target part associated with at least one of the identification information input to the terminal, the inspection-related information, and the machine attribute information.

2. The inspection workflow management system according to claim 1,
wherein at least one of the terminal and the server further includes a diagnosis section that identifies a cause of a defect of an inspection target part of the work machine based on a sensor value representing an operating state of the inspection target part,
the terminal displays an instruction to acquire the sensor value on the display section when the moving image data is acquired by the image capturing section, and
the diagnosis section identifies the cause of the defect of the inspection target part based on the sensor value acquired by the terminal, and causes the display section to display the identification result.

3. The inspection workflow management system according to claim 1,
wherein the server further includes
a registration management section that stores an acquisition history of moving image data of an inspection target part corresponding to the inspection workflow, and
in a case where the acquisition history of the moving image data of the inspection target part corresponding to the inspection workflow displayed on the display section is stored in the registration management section, the terminal displays the moving image data of the inspection target part corresponding to the inspection workflow on a part of a display region of the inspection workflow in the display section.

4. The inspection workflow management system according to claim 3,
wherein the registration management section calculates the number of acquisitions based on the acquisition history of the moving image data of the inspection target part corresponding to the inspection workflow, and
the terminal causes the number of acquisitions to be displayed in the display region of the inspection workflow.

5. The inspection workflow management system according to claim 1,
wherein the terminal determines a display order of an extraction result of the moving image data of the inspection target part on the display section based on a reference frequency of the moving image data.

6. The inspection workflow management system according to claim 1,
wherein the machine attribute information includes at least one of information regarding a customer who owns the work machine, information regarding an area where the work machine operates, information regarding a history of inspection and repair of the work machine, information regarding a work content of the work machine, information regarding an operating environment of the work machine, and information regarding a work load of the work machine.
